# EUROPEAN PATENT APPLICATION

(11) **EP 4 339 247 A1**
(43) Date of publication of application: **20.03.2024**
(21) Application number: 22195582.6
(22) Date of filing: 14.09.2022
(51) Int. Cl.: C09D 5/00

(54) **POWDER COATING COMPOSITION AND ADHESIVE CONNECTION**

(71) Applicant: Pulver Kimya San. ve Tic. A.S., 41400 Kocaeli (TR)
(72) Inventor: WITTIG, Martin Michael, 64297 Darmstadt (DE); PAKKAN, Hüseyin Ça atay, 41400 Gebze Kocaeli (TR)
(74) Representative: Neumann Müller Oberwalleney Patentanwälte PartG mbB

(57) **Abstract**

Powder coating composition for promoting adhesion, the powder coating composition consisting of an extruded and subsequently ground mixture of binding agents, hardening agents and optionally one or more of pigments, filler and additives, and porous particles of a mesoporous or microporous material in a proportion of one to twelve percent by weight of the powder coating composition; and adhesive connection of at least two joining partners having an adhesion promoting layer between the joining partners.

## Description

This disclosure refers to a powder coating composition for promoting adhesion, the powder coating composition consisting of an extruded and subsequently ground mixture of binding agents, hardening agents and optionally one or more of pigments, filler and additives, and porous particles of a mesoporous or microporous material in a proportion of one to twelve percent by weight of the powder coating composition; and to an adhesive connection of at least two joining partners having an adhesion promoting layer between the joining partners.

US 6 592 937 B1 discloses adhesion of a thermosetting powder coating to a glass substrate surface using a silane adhesion promoter, enhanced by modifying the pH of the glass surface to between 3.5 and 5, prior to, or during, the action of the promoter. The pH-modification may be effected during washing of the surface prior to spray-application of the promoter, or by including an acid or alkali modifier in the silane solution. Alternatively, the silane, or the silane and the modifier, may be included in the thermosetting powder to become active during fusing of the powder to the glass surface. An acid or alkali solution dried on the surface prior to application of the promoter for activation with the promoter on heating, may be used instead or in addition.

It is an objective to provide a powder coating composition with enhanced adhesion promoting capability of a coating made with the powder coating composition.

According to an aspect, the objective is achieved by a powder coating composition according to clam1. The powder coating composition for promoting adhesion consists of an extruded and subsequently ground mixture of binding agents, hardening agents and optionally one or more of pigments, filler and additives, and porous particles of a mesoporous or microporous material in a proportion of one to twelve percent by weight of the powder coating composition, wherein the porous particles have an average particle size of one micrometre to 200 micrometre.

The particles of a mesoporous or microporous material impart improved adhesion promoting properties of a coating made with the powder coating composition. The particle size is the length of the particle in its main direction of extension, or its diameter if no main direction of extension exists. A maximum particle size of the mesoporous or microporous material can be about three times the average particle size. The mesoporous or microporous material is a material containing pores or voids of a certain porosity and/or medium diameter of its pores.

According to embodiments, the porous particles can have an average particle size of one micrometre to 50 micrometre. An average particle size of one micrometre to ten micrometre and a maximum particle size of 20 micrometre to 30 micrometre advantageously provides a smooth surface of the coating made with the powder coating composition.

According to a further embodiment, the porous particles may be blended into the previously ground mixture. The porous particles are neither extruded with the ingredients of the ground mixture nor are the porous particles ground. The adhesion promoting properties imparted by the porous particles is enhanced by not processing them together with the other ingredients of the mixture. The porous particles can be bonded to nonporous particles of the ground mixture. Nonporous particles refer to the ingredients of the mixture that are extruded and subsequently ground. An application behaviour can be improved by bonding the porous particles. By bonding, a segregation of the porous particles from the nonporous particles is reduced. Further, bonded powder compositions have better processability and stability than non-bonded powder compositions, especially in continuous application systems with powder circulation. The porous particles bonded to the nonporous powder matrix results in a significantly improved adhesion promotion of the resulting coating.

For example, the porous particles are bonded in a mixer to the nonporous particles of the ground mixture. The powder coating composition is generally prepared by mixing the nonporous constituents and homogenizing the melted mixture in the extruder. Subsequently, solid lumps of extruded nonporous ingredients are ground to the desired nonporous particle size. Advantageously, a destruction of the porous particles can be prevented by admixing it to the nonporous particles after grinding, which is also called dry-blending. The powder coating composition may segregate. The effect of segregation can advantageously be reduced by the bonding process, wherein a uniform adhesion of the porous particles to surfaces of the nonporous particles is achieved. By heating the nonporous particles to almost glass-transition temperature, the porous particles are bonded to the sticky nonporous particles, thus reducing the segregation.

The mesoporous material, for example, has pores with diameters between 2 and 50 nanometre. In this context, mesoporosity refers to a classification of nanoscale porosity. The porous particles can be of microporous material, having pores with diameters less than 2 nanometre. Examples of microporous materials include zeolites and metal-organic frameworks. According to further embodiments, the porous particles may be of diatomaceous earth or another natural or synthetic microporous material, such as a zeolite or active alumina.

The powder coating composition is a solvent-free and environment-friendly composition, which may be applied electrostatically to a substrate, on which it may be cured by baking or by radiative energy to form a coating. Fluidised bed sintering is also a known powder coating process, wherein the powder coating composition is applied uniformly to a preheated surface by means of a fluidized bed.

According to a further embodiment, the proportion of the porous particles can be three to ten percent by weight of the powder coating composition, in particular the proportion of the porous particles can be five to seven percent by weight of the powder coating composition.

The optional pigments can be titanium dioxide, the optional filler may be one or more of calcium carbonate, talc and barium sulfate, and the optional additives can be a levelling agent, such as polyacrylate, and/or a degassing agent, such as benzoin.

According to a further aspect, an adhesive connection according to claim 7 is disclosed. The adhesive connection of at least two joining partners has an adhesion promoting layer between the joining partners, wherein the adhesion promoting layer is a coating of the powder coating composition of claim 1. The coating is made by applying the powder coating composition onto one of the joining partners.

According to a first embodiment of the adhesive connection, a first partner of the at least two joining partners is a print substrate and a second partner of the at least two joining partners is a printing medium. The adhesion promoting layer advantageously improves the adhesion of the print medium on the coated print substrate. For example, the print substrate is a surface to be printed on by a screen printing process, which surface is coated with the powder coating composition prior to application of the printing medium. A use of the powder coating composition in a printing process is disclosed.

According to a second embodiment of the adhesive connection, a first partner of the at least two joining partners is a component surface and a second partner of the at least two joining partners is a coating layer. The coating layer may be one of a corrosion protection coating, a varnish and an intumescent fire protecting coating. The adhesion promoting layer advantageously improves the adhesion of the coating layer on the coated component surface, wherein the component may be a metal structure. For example, the average particle size of the porous particles may be about 10 micrometre, with a maximum particle size of 30 micrometre, if a varnish is to be applied as a coating layer, to provide a smooth surface. If an intumescent fire protecting coating is to be applied, an average particle size of up to 200 micrometre may be used to provide improved adhesion when the intumescent fire protecting coating is activated by heat. The varnish may be a water-based. The component may be one of a radiator, a door, a window, or a machine. A use of the powder coating composition in a coating process of a component surface is disclosed.

According to a third embodiment of the adhesive connection, a first partner of the at least two joining partners is a component surface and a second partner of the at least two joining partners is a sealant. The component may be a wall cladding or façade cladding. The adhesion of the sealant, for example of silicone, on the component surface is enhanced by the adhesion promoting layer provided as a coating on the component surface. A use of the powder coating composition for sealing a component surface is disclosed.

According to a fourth embodiment of the adhesive connection, an adhesive layer is provided between the joining partners. The adhesive layer can be provided on the adhesion promoting layer. The adhesion promoting layer can be applied on both the first and the joining partner, wherein the adhesive layer can be provided between the two adhesion promoting layers on the joining partners. The adhesion between two rigid joining partners is enhanced, which is advantageous for adhesive connections, which are subject to high forces. For example, the first partner of the at least two joining partners can be a component surface and a second partner of the at least two joining partners can be a label, which is advantageously permanently fixed to the component. The component may be a pressure vessel, which has to be provided with a label containing the production and operational data. In a further example, the first partner of the at least two joining partners can be a component surface and the second partner of the at least two joining partners can be a weight, which is necessary for the component to operate within given parameters. The component may be a wheel for a vehicle or any other rotating part, wherein the weight may be a balancing weight. A use of the powder coating composition for forming an adhesive connection of two rigid components is disclosed.

According to a further aspect, a process for the production of a powder coating composition according to claim 15 is disclosed. In the process, the binding agents and the hardening agents, and as optional components the pigments, the filler and the additives are processed in an extruder, wherein an extrudate obtained in this way is ground, and wherein the porous particles are subsequently blended in or bonded to nonporous particles of the ground mixture. A powder coating composition produced by the process is disclosed.

Without further elaboration, it is believed that one skilled in the art can, using the preceding description, utilise the aspects of the disclosure to its full extent. The following exemplary embodiment is therefore to be construed as merely illustrative. In the foregoing and in the following example, all temperatures are set forth uncorrected in degrees Celsius, and, unless otherwise indicated, all parts and percentages are by weight.

The exemplary powder coating composition for promoting adhesion may be used for coating a substrate with high decorative requirements. The powder coating composition comprises a basic formulation for one of the group of epoxy-poyester, polyester/polyurethane and epoxy base, the basic formulation consisting of
- binding and hardening agents: 50-98%,
- levelling agent: 0.2-1.0%,
- degassing agent: 0.2-1.5%,
- pigments: 0-30%, and
- filler: 0-40%

The basic formulation is extruded and subsequently ground. The exemplary powder coating composition is subsequently obtained by bonding the porous particles, for example of diatomaceous earth, into the first basic formulation in a bonding mixer, the resulting powder coating composition consisting of
- the basic formulation: 94.00% and
- diatomaceous earth: 6.00%.

An average particle size of one micrometre to ten micrometre and a maximum particle size of 20 micrometre to 30 micrometre advantageously provide a smooth surface of the coating with high decorative requirements.

Non-limiting embodiments, advantages and experiments are described with respect to the attached images, wherein
Figure 1 shows an embodiment of an adhesive connection in a schematic illustration;
Figure 2 shows a further embodiment of an adhesive connection in a schematic illustration;
Figure 3 shows an exemplary embodiment of an adhesive connection according to Figure 2.

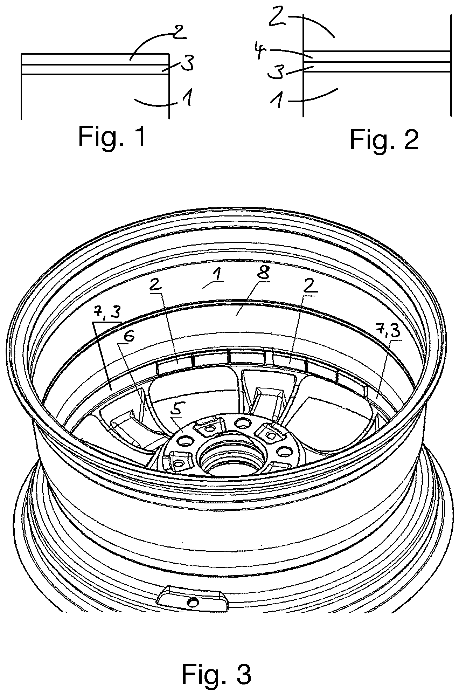

In Figure 1, an embodiment of an adhesive connection is schematically depicted. The adhesive connection of two joining partners 1, 2 has an adhesion promoting layer 3 between the joining partners 1, 2, wherein the adhesion promoting layer 3 is a coating of a powder coating composition, which consists of an extruded and subsequently ground mixture of binding agents, hardening agents and optionally one or more of pigments, filler and additives, and porous particles of a mesoporous or microporous material in a proportion of one to twelve percent by weight of the powder coating composition. The porous particles have an average particle size of 5 micrometre to 200 micrometre. For example, the first partner 1 of the at least two joining partners is a print substrate and the second partner 2 is a printing medium, or the first partner 1 is a component surface and the second partner 2 is a coating layer, or the first partner 1 is a component surface and the second partner 2 is a sealant.

In Figure 2, a further embodiment of an adhesive connection is schematically depicted. The adhesive connection of the two joining partners 1, 2 has the adhesion promoting layer 3 of Figure 1 between the joining partners 1, 2, wherein further an adhesive layer 4 is provided between the joining partners 1, 2. Furthermore, the adhesive layer 4 could be provided between two adhesion promoting layers 3, which is not depicted. For example, the first partner 1 is a component surface, may be of a pressure vessel, and the second partner 2 is a label, or the first partner 1 is a component surface of a wheel and the second partner 2 is a balancing weight.

In Figure 3, an exemplary embodiment of the adhesive connection according to Figure 2 is shown. A light alloy wheel is the first joining partner 1, which is depicted from its inner side. It consists of a wheel disc 5, spokes 6 and a rim 8. As two second joining partners 2, two balance weights are attached to a bonding surface 7, which is coated with the adhesion promoting layer 3. While the complete bonding surface 7 may be coated with the adhesion promoting layer 3, the adhesive layer 4 is provided only between the balance weights 2 and the bonding surface 7.

### Reference Numerals

- 1: First joining partner
- 2: Second joining partner
- 3: Adhesion promoting layer
- 4: Adhesive layer
- 5: Wheel disc
- 6: Spokes
- 7: Bonding surface

## Claims

1. Powder coating composition for promoting adhesion,
the powder coating composition consisting of
- an extruded and subsequently ground mixture of binding agents, hardening agents and optionally one or more of pigments, filler and additives; and
- porous particles of a mesoporous or microporous material in a proportion of one to twelve percent by weight of the powder coating composition;
wherein the porous particles have an average particle size of one micrometre to 200 micrometre.

2. Powder coating composition according to claim 1, **characterized in that** the porous particles have an average particle size of one micrometre to 50 micrometre.

3. Powder coating composition according to claim 1, **characterized in that** the porous particles have an average particle size of one micrometre to ten micrometre and a maximum particle size of 20 micrometre to 30 micrometre.

4. Powder coating composition according to claim 1, **characterized in that** the porous particles are blended into the previously ground mixture.

5. Powder coating composition according to claim 1, **characterized in that** the porous particles are bonded to nonporous particles of the previously ground mixture.

6. Powder coating composition according to claim 1, **characterized in that** the porous particles are of diatomaceous earth or another natural or synthetic microporous material, such as a zeolite or active alumina.

7. Adhesive connection of at least two joining partners (1, 2) having an adhesion promoting layer (3) between the joining partners, **characterized in that** the adhesion promoting layer is a coating of the powder coating composition of any one of claims 1 to 6.

8. Adhesive connection according to claim 7, **characterized in that** a first partner
(1) of the at least two joining partners is a print substrate and a second partner
(2) of the at least two joining partners is a printing medium.

9. Adhesive connection according to claim 7, **characterized in that** a first partner (1) of the at least two joining partners is a component surface and a second partner (2) of the at least two joining partners is a coating layer.

10. Adhesive connection according to claim 9, **characterized in that** the coating layer is one of a corrosion protection coating, a varnish and an intumescent fire protecting coating.

11. Adhesive connection according to claim 7, **characterized in that** a first partner (1) of the at least two joining partners is a component surface and a second partner (2) of the at least two joining partners is a sealant.

12. Adhesive connection according to claim 7, **characterized in that** an adhesive layer (4) is provided between the joining partners.

13. Adhesive connection according to claim 12, **characterized in that** a first partner (1) of the at least two joining partners is a component surface and a second partner (2) of the at least two joining partners is a label.

14. Adhesive connection according to claim 12, **characterized in that** a first partner (1) of the at least two joining partners is a component surface (7) and a second partner (2) of the at least two joining partners is a weight.

15. Process for the production of a powder coating composition according to any one of claims 1 to 6, wherein the binding agents and the hardening agents, and as optional components the pigments, the filler and the additives are processed in an extruder, wherein an extrudate obtained in this way is ground, and wherein the porous particles are subsequently blended in or bonded to nonporous particles of the ground mixture.
